(19) **Europäisches Patentamt**

**European Patent Office**

**Office européen des brevets**

(11) **EP 1 630 984 A1**

(12) **EUROPEAN PATENT APPLICATION**

(43) Date of publication:
**01.03.2006 Bulletin 2006/09**

(51) Int Cl.:
**H04B 10/17** (2006.01)

(21) Application number: **04292110.6**

(22) Date of filing: **30.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **ALCATEL**
**75008 Paris (FR)**

(72) Inventors:
• **Charlet, Gabriel**
  **91190 Villiers le Bacle (FR)**
• **Antona, Jean-Christophe**
  **92120 Montrouge (FR)**

(74) Representative: **Schäfer, Wolfgang et al**
**Dreiss, Fuhlendorf, Steimle & Becker**
**Postfach 10 37 62**
**70032 Stuttgart (DE)**

(54) **Method for controlling the power of an optical amplifier**

(57)     The present invention relates to a method of operating an optical amplifier (1a), in particular an erbium doped fiber amplifier (EDFA) or a Raman amplifier, an output signal of which is supplied to an optical fiber (2), characterized by determining a span loss of said optical fiber (2) and by controlling an output power (P_out) of said optical amplifier (1a) depending on said span loss.

The present invention further refers to an optical amplifier (1a), in particular an erbium doped fiber amplifier (EDFA) or a Raman amplifier.

Fig. 1

EP 1 630 984 A1

## Description

The present invention relates to a method of operating an optical amplifier, in particular an erbium doped fiber amplifier (EDFA) or a Raman amplifier, an output signal of which is supplied to an optical fiber.

The present invention further relates to an optical amplifier, in particular an erbium doped fiber amplifier (EDFA) or a Raman amplifier.

Many contemporary optical amplifiers are operated at a constant output power which in many cases leads to a degradation of the performance of a transmission system comprising such optical amplifiers. The reasons for this degradation are manifold: when transmitting a signal via a comparatively short optical fiber, there are many non-linear effects that affect signal quality, which is due to the comparatively high output power. On the other hand, when transmitting a signal via a comparatively long optical fiber, a corresponding span loss within said long optical fiber, i.e. an attenuation of said signal, is increased and consequently a signal to noise ratio (SNR) or an optical signal to noise ratio (OSNR), respectively, gets worse.

Therefore, it is an object of the present invention to provide an improved method of operating an optical amplifier and an improved optical amplifier as well.

Regarding the above mentioned method, said object is achieved by determining a span loss of said optical fiber and by controlling an output power of said optical amplifier depending on said span loss.

The span loss of an optical fiber primarily depends on absorption, scattering processes and extrinsic losses caused e.g. by a poor mechanical connection of optical fiber segments and is basically proportional to a length of said optical fiber.

According to the present invention, it is possible to reduce the output power of said optical amplifier in those cases, in which a comparatively short optical fiber - having a comparatively low span loss - is connected to said optical amplifier and wherein a high output power would induce too many non-linear effects on a signal transmitted via said short optical fiber.

When connecting said output amplifier to a comparatively long optical fiber - having a comparatively high span loss - an attenuation of said signal becomes dominant which effects a decreased signal to noise ratio at an amplifier or receiver receiving said signal. According to the inventive method, in these cases the output power of said optical amplifier is increased so as to maintain a suitable signal to noise ratio.

A very advantageous embodiment of the present invention is characterized by increasing said output power of said optical amplifier when an increase of said span loss is determined. Thus a decrease of the signal to noise ratio can be prevented.

A further advantageous embodiment of the present invention proposes to decrease said output power of said optical amplifier when a decrease of said span loss is determined. This variant helps to avoid non-linear effects within said optical fiber to become dominant

In particular, according to another variant of the present invention, it is proposed to increase said output power by 1dB for each increase of said span loss by 2dB, and/or to decrease said output power by 1dB for each decrease of said span loss by 2dB.

A further very advantageous embodiment of the present invention is characterized in that the inventive step of determining said span loss is performed according to the following steps:

- transmitting a signal from said optical amplifier via said optical fiber to a second optical amplifier, said signal having an output power both known in said optical amplifier and said second optical amplifier,

- determining an actual input power of said signal received by said second optical amplifier, and

- determining said span loss based on said defined output power and on said actual input power.

Particularly a comparison of said actual input power of the signal received by the second optical amplifier with said kwown output power enables to determine an actual span loss caused by said optical fiber and/or its connection(s) to said optical amplifiers. On the basis of the actual span loss so obtained, an output power of said optical amplifier can be adjusted, i.e. increased or decreased, so as to minimize non-linear effects within the optical fiber while at the same time maintaining a suitable signal to noise ratio as already explained above.

Another advantageous embodiment of the present invention proposes to transmit said span loss from said second optical amplifier to said optical amplifier. This is necessary because usually the span loss will be determined within said second optical amplifier. Advantageously, a supervisory channel is used for transmitting said span loss.

However, the present invention is not limited to the aforementioned configuration. According to the present invention, it is also possible to determine said span loss within said optical amplifier e.g. by employing a kind of loop-back procedure in which a signal having a known output power is firstly transmitted to a second optical amplifier which, upon receiving said signal, secondly returns said signal to said optical amplifier in a way that allows for assessing a span loss, e.g. via a separate, previously unused optical fiber or the like. For instance, said second optical amplifier returns said signal to said optical amplifier with a gain that is both known by the optical amplifier and the second optical amplifier. In this case, no separate transmission of the span loss e.g. via the supervisory channel is necessary because said span loss can be determined based on a difference of said output power, said gain, and an input power at the optical amplifier.

Once the span loss is determined, it can be transmitted to further optical amplifiers according to a further advantageous embodiment of the present invention. This is particularly useful within transmission systems in which several optical amplifiers are connected to further amplifiers according to the present invention. By doing so, a once determined span loss can be used within a plurality of optical amplifiers to control their output power(s), provided the actual span loss of the respective optical fibre is comparable to the span loss of the fibre said span loss has been determined for.

According to yet another advantageous embodiment of the present invention, controlling an output power for said step of transmitting from said second optical amplifier to said optical amplifier(s) depending on said span loss is proposed.

According to a further advantageous embodiment of the present invention, it is proposed to interchange a previously determined span loss between a plurality of amplifiers. This is particularly useful when said amplifiers are connected to optical fibers having a similar length and thus most probably a similar span loss, too.

Another advantageous embodiment of the present invention is characterized by controlling said output power by using a variable optical attenuator (VOA) and/or by controlling a current of a laser diode used in an erbium doped fiber amplifier (EDFA), in particular in a second stage of said erbium doped fiber amplifier (EDFA).

Another advantageous embodiment of the present invention is characterized by maintaining a gain flatness of said optical amplifier(s) when controlling said output power, in particular by adjusting a variable optical attenuator (VOA) in an intermediate stage of said erbium doped fiber amplifier (EDFA).

A further solution to the object of the present invention is given by an optical amplifier characterized by being capable of controlling an output power of an output signal which is supplied to an optical fiber by said optical amplifier depending on a span loss of said optical fiber.

Another advantageous embodiment of the optical amplifier according to the present invention is characterized by being capable of interchanging a span loss with further optical amplifiers.

Another advantageous embodiment of the optical amplifier according to the present invention is characterized by being capable of performing the method according to one of the claims 1 to 11.

Further details and advantages of the present invention are presented in the following detailed description with reference to the drawings, in which

Fig. 1    depicts a first embodiment of the present invention,

Fig. 2    depicts a second embodiment of the present invention,

Fig. 3    depicts a third embodiment of the present invention, and

Fig. 4    depicts an embodiment of the method according to the present invention.

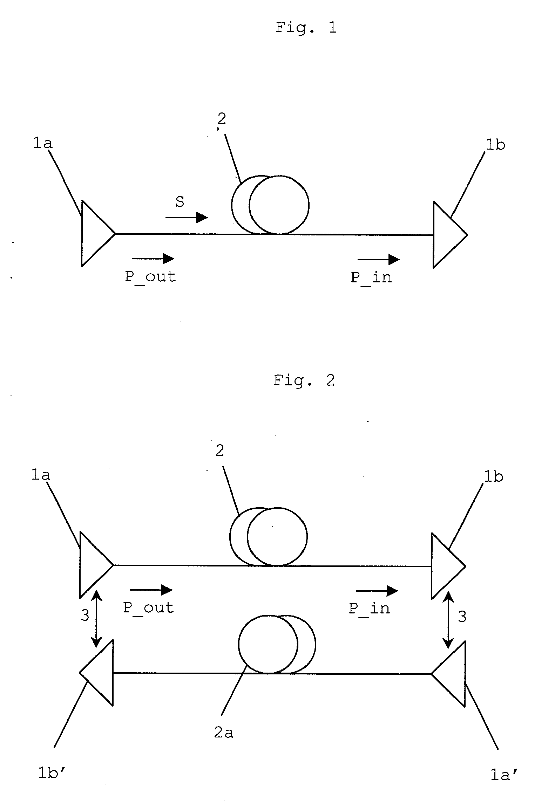

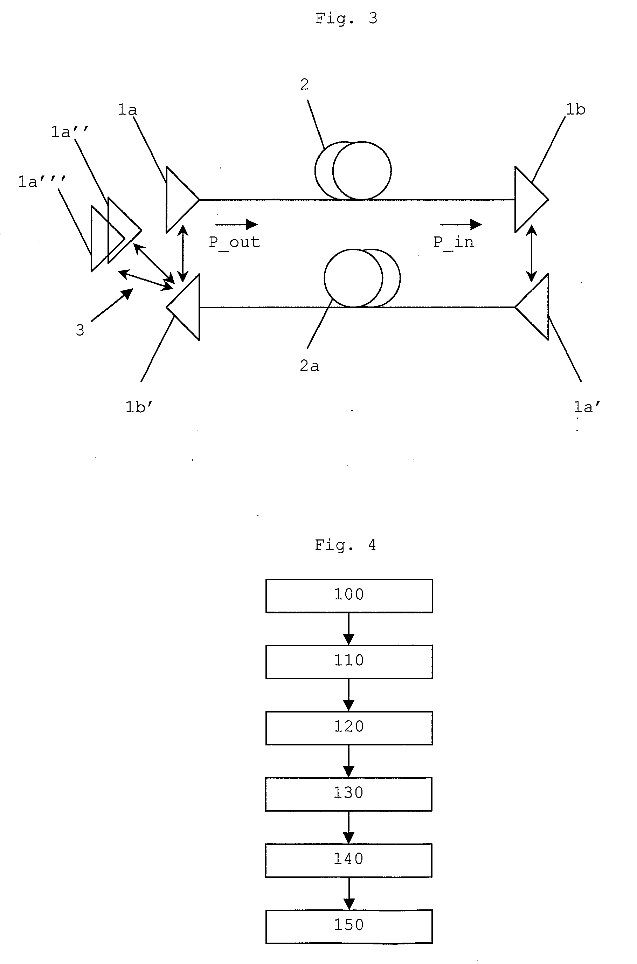

Fig. 1 shows an optical transmission system which comprises an optical amplifier 1a, which may e.g. be an erbium doped fiber amplifier (EDFA), an optical fiber 2 which is connected to an output of said optical amplifier 1a, and a second optical amplifier 1b, an input of which is connected to said optical fiber 2.

During operation of said transmission system, a signal S is output from said optical amplifier 1a and is supplied to said optical fiber 2. Said signal S has a known output power level which is symbolized by the arrow P_out in Fig. 1.

Due to absorption, scattering effects and the like, said signal S is attenuated while travelling within said optical fiber 2. Said attenuation can be characterized by a so-called span loss which, inter alia, depends on a length of said optical fiber 2. As a consequence, said signal S comprises an input power level P_in at said second optical amplifier 1b, which is usually smaller than said output power level P_out at the output of said optical amplifier 1a:

$$P\_in < P\_out.$$

According to the present invention, said signal S has an output power level P_out, which is known in said optical amplifier 1a and said second optical amplifier 1b, too. The transmission of said signal S is symbolized by step 100 of the flow chart depicted in Fig. 4.

Within the second optical amplifier 1b, said signal S is received, cf. step 110 of Fig. 4, and hereafter the actual input power P_in of said signal S is measured in step 120.

Due to the above explained span loss of said optical fiber 2, said actual input power P_in is lower than said output power P_out, and the difference P_out - P_in is proportional to said span loss. This enables to determine said span loss in step 130 of Fig. 4.

According to the present invention, said span loss is now used to control an output power of said optical amplifier 1a, Fig. 1. For this purpose, the span loss is transmitted from said second optical amplifier 1b to said optical amplifier 1a in step 140. The transmission of said span loss is performed via a supervisory channel (not shown) of said transmission system. Said supervisory channel may e.g. be a logical channel provided within a transmission using the optical fiber 2 or any other suitable communications channel.

Finally, in step 150 (Fig. 4), said optical amplifier 1a uses the received span loss value to control an output power P_out of the signal S. This enables to adapt the output power P_out to a changing value of the span loss.

Without such an adaption of the output power P_out, an increasing span loss leads to a worse signal to noise ratio of said signal S at an input of said second optical amplifier 1b and in case of a decreasing span loss non-linear effects adversely affecting said signal s could be avoided by decreasing the output power P_out. Said effects are found in prior art transmission systems and can be overcome according to the present invention by dynamically altering the output power P_out of said optical amplifier 1a depending on said span loss.

For instance, the method of obtaining the span loss explained with reference to Fig. 4 can be performed periodically to ensure a reliable control of said output power P_out.

If e.g. an increase of said span loss is determined and said increased span loss is transmitted to said optical amplifier 1a, the optical amplifier 1a is controlled such that the output power P_out of the signal S is also increased to compensate the increased span loss in order to reduce an OSNR degradation.

Conversely, if e.g. a decrease of said span loss is determined and said decreased span loss is transmitted to said optical amplifier 1a, the optical amplifier 1a is controlled such that the output power P_out of the signal S is also decreased to compensate the decreased span loss in order not to unnecessarily invoke non-linear effects on said signal S within the optical fiber 2.

As an example, said output power P_out is increased by 1dB for each increase of said span loss by 2dB, and said output power P_out is decreased by 1dB for each decrease of said span loss by 2dB.

According to a second embodiment of the present invention, which is depicted in Fig. 2, the second optical amplifier 1b is provided with a further optical amplifier 1a'. Generally, a data exchange between said second optical amplifier 1b and said optical amplifier 1a' is possible via an interface symbolized by a double arrow 3 in Fig. 2. Said interface 3 is provided for exchanging, inter alia, a span loss value determined within said second optical amplifier 1b according to the above explained process (Fig. 1, Fig. 4).

As can be seen from Fig. 2, said span loss may be transmitted by said optical amplifier 1a' via said optical fiber 2a to a further optical amplifier 1b', which is connected to said optical amplifier 1a with an interface 3. Consequently, said optical amplifier 1b' may also exchange a span loss previously received from said optical amplifier 1a' with said optical amplifier 1a.

With the configuration according to Fig. 2, it is possible to determine a span loss used to control an output power P_out of said optical amplifier 1a in two different ways:

Firstly, the span loss may be determined within said second optical amplifier 1b upon receiving said signal S (Fig. 1) as explained above. Said span loss may then be sent to said optical amplifier 1a via said interface 3, said optical amplifier 1a', said optical fiber 2a, and finally said optical amplifier 1b' and its interface to the optical amplifier 1a. A supervisory channel of the optical transmission system may be used.

Secondly, it is possible to receive said signal S within said second optical amplifier 1b, to determine an actual input power P_in within said second optical amplifier 1b, and to pass over said signal S from said second optical amplifier 1b to said optical amplifier 1a' which returns said signal S with a known gain factor to said optical amplifier 1a via said optical fiber 2a and said optical amplifier 1b'. According to this variant, said signal S is twice attenuated during its travel along said optical fibers 2, 2a and it is imparted a known gain by said optical amplifier 1a' which enables said optical amplifier 1a to determine a corresponding span loss of the optical fibers 2, 2a.

Evidently, a span loss determined within said second optical amplifier 1b may be used to adapt an output power of said optical amplifier 1a' so as to optimise a transmission of a signal from said amplifier 1a' to said optical amplifier 1b' as well, provided said optical fibers 2, 2a are assumed to have a similar span loss.

A further embodiment of the present invention is depicted in Fig. 3. As can be seen, a plurality of optical amplifiers 1a, 1a', 1a'', 1a''', 1b, 1b' are provided in an optical transmission system of this embodiment of the invention.

The optical amplifiers 1a, 1a'', 1a''' are connected to said optical amplifier 1b' via a respective interface 3 and can thus be supplied with a span loss previously determined as explained above e.g. within said second optical amplifier 1b. The span loss may also be determined by said optical amplifier 1b'.

According to a further embodiment, it is also possible for the optical amplifiers 1a, 1a', 1a'', 1a''', 1b, 1b' to exchange a span loss or further data representing a span loss value characterizing an optical fiber 2, 2a of said transmission system. Said exchange may be performed via said interface 3, said optical fibers 2, 2a e.g. by means of a supervisory channel, or via any other suitable communications channel.

A very advantageous way of controlling said output power P_out of said optical amplifier(s) 1a, 1a', 1a'', 1a''', 1b, 1b' is given by a variable optical attenuator (VOA) at the output of the respective optical amplifier which is not shown but which is known from prior art systems (cf. e.g. "Development of a Variable Optical Attenuator", Sato et. al., Furukawa review No. 20, April 2001, http://www.furukawa.co.jp/review/fr020/fr20_04.pdf).

Alternatively, e.g. a current of a laser diode used in a second stage of an erbium doped fiber amplifier (EDFA) may be altered to effect an output power control as described above.

When performing a control of said output power P_out, a gain flatness of said optical amplifier 1a has to be maintained, which can advantageously be achieved by adjusting a variable optical attenuator (VOA) in an intermediate stage (not shown) of said optical amplifier 1a. It is also possible to employ a method as described by G. Charlet and C. Simmoneau in EP 03291119.

Simulations have verified that by using the method according to the present invention, a performance improvement concerning a Q-factor of the signal S of about 2dB can be achieved.

## Claims

1. Method of operating an optical amplifier (1a), in particular an erbium doped fiber amplifier (EDFA) or a Raman amplifier, an output signal of which is supplied to an optical fiber (2), **characterized by** determining a span loss of said optical fiber (2) and by controlling an output power (P_out) of said optical amplifier (1a) depending on said span loss.

2. Method according to claim 1, **characterized by** increasing said output power (P_out) of said optical amplifier (1a) when an increase of said span loss is determined and/or by decreasing said output power (P_out) of said optical amplifier (1a) when a decrease of said span loss is determined.

3. Method according to claim 2, **characterized by** increasing said output power (P_out) by 1dB for each increase of said span loss by 2dB, and/or by decreasing said output power (P_out) by 1dB for each decrease of said span loss by 2dB.

4. Method according to one of the preceding claims, wherein determining said span loss is performed according to the following steps:

   - transmitting a signal (S) from said optical amplifier (1a) via said optical fiber (2) to a second optical amplifier (1b), said signal (S) having an output power (P_out) both known in said optical amplifier (1a) and said second optical amplifier (1b),
   - determining an actual input power (P_in) of said signal (S) received by said second optical amplifier (1b), and
   - determining said span loss based on said defined output power (P_out) and on said actual input power (P_in).

5. Method according to one of the preceding claims, **characterized by** transmitting said span loss from said second optical amplifier (1b) to said optical amplifier (1a).

6. Method according to claim 5, **characterized by** transmitting said span loss to further optical amplifiers (1a', 1a'',....).

7. Method according to one of the claims 5 or 6, **characterized by** controlling an output power for said step of transmitting from said second optical amplifier (1b) to said optical amplifier(s) (1a, 1a', 1a'', 1a''', 1b', ....) depending on said span loss.

8. Method according to one of the claims 5 to 7, **characterized by** using a supervisory channel for transmitting said span loss.

9. Method according to one of the preceding claims, **characterized by** interchanging a previously determined span loss between a plurality of amplifiers (1a, 1a', 1a'', 1a'', 1a''', 1b', 1b', ....) .

10. Method according to one of the preceding claims, **characterized by** controlling said output power (P_out) by using a variable optical attenuator (VOA) and/or by controlling a current of a laser diode used in an erbium doped fiber amplifier (EDFA), in particular in a second stage of said erbium doped fiber amplifier (EDFA) .

11. Method according to one of the preceding claims, **characterized by** maintaining a gain flatness of said optical amplifier(s) (1a, 1a', 1a'', 1a''', 1b, 1b', ....) when controlling said output power (P_out), in particular by adjusting a variable optical attenuator (VOA) in an intermediate stage of said erbium doped fiber amplifier (EDFA).

12. Optical amplifier (1a), in particular an erbium doped fiber amplifier (EDFA) or a Raman amplifier, **characterized by** being capable of controlling an output power (P_out) of an output signal which is supplied to an optical fiber (2) by said optical amplifier (1a) depending on a span loss of said optical fiber (2).

13. Optical amplifier (1a) according to claim 12, **characterized by** being capable of interchanging a span loss with further optical amplifiers (1a', 1a'', 1a''', 1b, 1b'', .... ).

14. Optical amplifier (1a) according to claim 12 or 13, **characterized by** being capable of performing the method according to one of the claims 1 to 11.

Fig. 1

Fig. 2

Fig. 3

Fig. 4

**European Patent Office**

**EUROPEAN SEARCH REPORT**

Application Number

EP 04 29 2110

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2004/037564 A1 (HALEVI ILAN ET AL) 26 February 2004 (2004-02-26) * paragraph [0001] * * paragraphs [0075] - [0085] * * paragraphs [0091] - [0098] * * paragraphs [0111] - [0117] * ----- | 1-14 | H04B10/17 |
| X | US 6 201 635 B1 (YAMANAKA MIKINORI ET AL) 13 March 2001 (2001-03-13) * column 4, line 63 - column 5, line 33 * * figure 4 * ----- | 1,2,4-7, 9,10, 12-14 | |
| X | US 2002/135868 A1 (CORNELIUS STEVEN W ET AL) 26 September 2002 (2002-09-26) * paragraphs [0004], [0005] * * paragraph [0035] - paragraph [0042] * ----- | 1,12 | |

TECHNICAL FIELDS
SEARCHED (Int.Cl.7)

H04B

The present search report has been drawn up for all claims

| Place of search | Date of completion of the search | Examiner |
|---|---|---|
| The Hague | 27 January 2005 | Larcinese, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 04 29 2110

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2005

| Patent document cited in search report | Publication date | Patent family member(s) | Publication date |
|---|---|---|---|
| US 2004037564 A1 | 26-02-2004 | WO 2004002025 A1 | 31-12-2003 |
| US 6201635 B1 | 13-03-2001 | JP 2000022639 A | 21-01-2000 |
| US 2002135868 A1 | 26-09-2002 | WO 02058283 A2 | 25-07-2002 |

For more details about this annex : see Official Journal of the European Patent Office, No. 12/82